Europäisches Patentamt

European Patent Office

Office européen des brevets

(11) Veröffentlichungsnummer: **0 421 193 A1**

# EUROPÄISCHE PATENTANMELDUNG

(21) Anmeldenummer: **90118048.9**

(22) Anmeldetag: **19.09.90**

(51) Int. Cl.5: **C08K 3/22**, C08K 3/28, C08K 3/34, C08K 3/38, H01B 3/30

(30) Priorität: **02.10.89 DE 3932882**

(43) Veröffentlichungstag der Anmeldung: **10.04.91 Patentblatt 91/15**

(84) Benannte Vertragsstaaten: **BE DE DK ES FR GB GR IT LU NL**

(71) Anmelder: **Siemens Aktiengesellschaft Wittelsbacherplatz 2 W-8000 München 2(DE)**

Anmelder: **HOECHST AKTIENGESELLSCHAFT Brüningstrasse 50 W-6230 Frankfurt/Main 80(DE)**

(72) Erfinder: **Criens, Ralf, Dr.**

**Stengelstrasse 2 W-8000 München 40(DE)**
Erfinder: **Bötzl, Franz, Dr. Bischof-Landersdorfer-Strasse 6 W-8390 Passau(DE)**
Erfinder: **Fleischer, Dietrich, Dr. Seiters Weg 19 W-6100 Darmstadt(DE)**
Erfinder: **Kirsch, Günter, Dr. Paulinenstrasse 24 W-6232 Bad Soden(DE)**

(74) Vertreter: **Fuchs, Franz-Josef, Dr.-Ing. Postfach 22 13 17 W-8000 München 22(DE)**

(54) **Gut wärmeleitender Verbundwerkstoff.**

(57) Für elektrisch isolierende und gut wärmeleitende Teile bei elektrischen und elektronischen Bauelementen wird ein hochwärmebeständiger Verbundwerkstoff vorgeschlagen, welcher aus einem hochwärmebeständigen Polymeren und einem elektrisch isolierenden mineralischen Füllstoff mit hoher Wärmeleitfähigkeit besteht. Der beispielsweise mit 50 bis 90 Gewichtsprozent Sinterkeramik gefüllte Verbundwerkstoff ist spritzgießfähig und extrudierbar und aufgrund seiner hohen Wärmeleitfähigkeit von über 1 W/mK, seiner elektrischen Durchschlagsfestigkeit von größer 3 kV/mm und seiner hohen Wärmeformbeständigkeit von größer 180° C gut für elektrische Bauelemente bei 220 Volt und Betriebstemperaturen bis ca. 150° geeignet.

EP 0 421 193 A1

## GUT WÄRMELEITENDER VERBUNDWERKSTOFF.

Die Erfindung betrifft einen hochwärmebeständigen Verbundwerkstoff sowie dessen Verwendung.

Die zunehmende Miniaturisierung von elektronischen Bauteilen und die damit einhergehende Zunahme der Integrationsdichte von elektronischen Schaltungen und Baugruppen schafft Probleme durch die beim Betrieb der Bauelemente entstehende Verlustwärme. Durch die höhere Leistungsdichte sind auch zunehmend größere Wärmemengen von den Bauteilen abzuführen, um diese vor einer Beschädigung durch Überhitzung zu bewahren.

Bei geschlossenen Umhüllungen oder Gehäusen von Bauelementen muß die anfallende Verlustwärme über das Material der Umhüllung bzw. des Gehäuses abgeleitet werden. Bekannte Umhüllungen aus ungefüllten Thermoplasten weisen zwar die ebenfalls erforderliche gute elektrische Isolierung auf, besitzen jedoch nur eine oft nicht ausreichende thermische Leitfähigkeit von ca. 0,2 bis 0,4 W/mK.

Zur Erhöhung dieses niedrigen Wärmeleitwertes werden mit entsprechend wärmeleitfähigen Partikeln gefüllte Kunststoffe verwendet. Im europäischen Patent 167 000 werden Aluminiumpartikel als Füllstoff vorgeschlagen. Die Füllstoffpartikel sind dabei mit einer geschlossenen Polyethylenschicht überzogen, um eine ausreichende elektrische Isolierung des damit gefüllten Kunststoffes zu gewährleisten. Es werden zwar Wärmeleitwerte von ca. 2 bis 5 Watt/mK erreicht, jedoch keine ausreichende Spannungsfestigkeit, um alle Anforderungen für einen Einsatz bei Bauelementen im 220-Volt-Betrieb zu erfüllen.

Aufgabe der vorliegenden Erfindung ist es daher, einen Werkstoff anzugeben, welcher eine gute Wärmeleitfähigkeit von mindestens 1,5 W/mK aufweist, dabei elektrisch isolierend ist und eine Durchschlagsspannung aufweist, die eine Anwendung für mit 220 Volt effektiv betriebene Bauelemente erlaubt.

Diese Aufgabe wird erfindungsgemäß gelöst durch einen hochwärmebeständigen Verbundwerkstoff, bestehend aus

- 15 bis 50 Gewichtsprozent eines hochwärmebeständigen thermoplastischen Polymeren mit einer Wärmeformbeständigkeit größer/gleich 180 °C und

- 50 bis 85 Gewichtsprozent eines mineralischen kristallinen Füllstoffes mit einer Wärmeleitfähigkeit größer/gleich 10 WmK,

wobei der extrudierbare und spritzgießfähige verbundwerkstoff eine Wärmeleitfähigkeit von mindestens 1 W/mK, eine Wärmeformbeständigkeit von größer gleich 180 °C und eine elektrische Durchschlagsfestigkeit von größer gleich 3 kV/mm aufweist.

Weitere Ausgestaltungen der Erfindung sowie eine Verwendung für diesen Verbundwerkstoff sind den Unteransprüchen zu entnehmen.

Der Kern der Erfindung beruht auf den vorteilhaften und gleichwohl überraschenden Eigenschaften des erfindungsgemäßen Verbundwerkstoffes. Mineralische und harte Füllstoffe ließen sich bislang nur unter großen Schwierigkeiten verarbeiten, da die Härte der verwendeten Füllstoffpartikel eine erhöhte Abrasion der verwendeten Apparaturen zur Folge hatte und die Verarbeitung daher unwirtschaftlich werden ließ. Auch war eine Verarbeitung bisher nur bis zu bestimmten Füllstoffgehalten möglich. Überraschend zeigt der erfindungsgemäße Verbundwerkstoff nun eine gute Extrudierbarkeit und ist spritzgießfähig bis hin zu einem maximalen Füllstoffgehalt von 85 Gewichtsprozent. Die im angegebenen Bereich erzielten Wärmeleitwerte liegen über 1,5 W/mK, wobei gleichzeitig eine Durchschlagsfestigkeit von 3 $kV_{eff}$/mm und mehr erzielt wird. Dies macht den Verbundwerkstoff hervorragend geeignet zur Herstellung von Umhüllungen, Gehäusen usw. von elektrischen und elektronischen Bauelementen, bei denen eine hohe Wärmeableitung bei gleichzeitig guter elektrischer Isolation erforderlich ist.

Möglich werden die hohen Füllstoffgehalte und die damit erzielten Eigenschaften des Verbundwerkstoffes durch die Auswahl des verwendeten Polymeren. Die geforderte Temperatur- und Wärmeformbeständigkeit wird zum Beispiel von sogenannten Hochtemperaturthermoplasten erfüllt, die gleichzeitig weitere günstige Eigenschaften aufweisen und für den Verbundwerkstoff hervorragend geeignet sind. Diese Polymere weisen hochgeordnete Strukturen auf und schaffen somit ausreichend Platz für Füllstoffpartikel bis hin zu dem genannten hohen Füllstoffgrad. Dabei zeigen diese Polymere unter den Verarbeitungsbedingungen, insbesondere bei hohen Drucken und hohen Verarbeitungstemperaturen eine hohe Fließfähigkeit, so daß trotz hohen Füllstoffgehaltes keine wesentlich höheren Kräfte für die Verarbeitung des Verbundwerkstoffes aufgewendet werden müssen. Dabei wird gleichzeitig eine vorzeitige Abnützung der verwendeten Verarbeitungsvorrichtungen und somit eine Verkürzung deren Lebensdauer verhindert.

Hochwärmebeständige Thermoplaste, die auch für den erfindungsgemäßen Verbundwerkstoff geeignet sind, sind insbesondere flüssigkristalline Polymere (LCP), Polyphenylensulfid (PPS), Polyetherimid (PEI), Polyethersulfon (PES), Polyetheretherketon (PEEK), Polyethylenterephthalat (PET), Polybutylenterephthalat (PBT), Polysulfon (PSU), Polyaryletherketon, Polyamid/imid (PAI), Polyimide (PI) sowie verschiedene Polyamide (zum Beispiel PA 46, PA 11 und PA 12).

Besonders geeignet für den erfindungsgemäßen Verbundwerkstoff sind flüssigkristalline Polymere, bei denen schon der Name von deren auch im flüssigen Zustand hochgeordneter Struktur zeugt. Mit diesen Polymeren werden die höchsten Füllstoffgrade erreicht. Bevorzugte flüssigkristalline Polymere weisen zumindest teilaromatische Strukturen auf und sind ausgewählt aus Copolyester, Polyestercarbonat und Polyesteramid.

Für einen gut wärmeleitenden Verbundwerkstoff sind Füllstoffe erforderlich, die ebenfalls eine hohe Wärmeleitfähigkeit aufweisen und dabei elektrisch isolierend sind. Dies sind vor allem kristalline Füllstoffe, bei denen die Wärmeleitung durch Gitterschwingungen (Phononen), nicht aber durch Elektronenbeitrag zustandekommt. Dadurch werden die elektrisch isolierenden Eigenschaften des Füllstoffes und somit des Verbundwerkstoffes gewährleistet.

Für eine hohe thermische Leitfähigkeit des Verbundwerkstoffes ist jedoch nicht in erster Linie die Leitfähigkeit des Füllstoffes ausschlaggebend, sondern der Volumenanteil des Füllstoffes im Verbundwerkstoff. Auswahlkriterium für einen guten Füllstoff ist daher dessen Verträglichkeit mit dem Thermoplasten, bzw. dessen Fähigkeit, in Kombination mit einem geeigneten Thermoplasten einen hohen Füllstoffgrad zu erzielen.

Geeignete Füllstoffe sind aus der Klasse der Oxide, Nitride und Carbide von Elementen der dritten bis sechsten Hauptgruppe ausgewählt. Derartige zur Gruppe der Sinterkeramiken zählenden Verbindungen sind beispielsweise Aluminiumnitrid, Aluminiumoxid, Bornitrid, Siliziumcarbid, Borcarbid und Siliziumnitrid. Ein Füllstoff, mit dem besonders gute Eigenschaften des Verbundwerkstoffes erreicht werden können, ist Aluminiumnitrid. Aufgrund dessen hohen Preises ist jedoch dessen Verwendung in großem Maßstab nicht wirtschaftlich. Unter diesem Gesichtspunkt ist Aluminiumoxid vorzuziehen. Einen guten Kompromiß bezüglich Wirtschaftlichkeit und Eigenschaften stellt das Siliziumcarbid dar. Jedoch zeigt ein damit gefüllter Verbundwerkstoff eine etwas niedrigere elektrische Durchschlagsfestigkeit, da Siliziumcarbid ein schwacher Halbleiter ist.

Vorteilhafterweise besitzen die Füllstoffpartikel Korngrößen kleiner 50 μm. Die Form der Partikel ist dabei beliebig, und lediglich vom Herstellungsverfahren abhängig. Zwar wird bei der Verwendung von kurzen Fasern als Füllstoff ein Verbundwerkstoff erhalten, der außergewöhnlich gute wärmeleitende Eigenschaften aufweist, jedoch sind die Fasern bislang aufgrund ihres hohen Preises nicht wirtschaftlich einsetzbar. Bei einem Füllstoff mit annäherend kugelförmigen Partikeln werden Füllstoffgehalte von zum Beispiel 50 Volumenprozent erreicht, was in Abhängigkeit vom Füllstoff und dem Polymeren zum Beispiel 70 Gewichtsprozent entspricht. Damit werden Wärmeleitwerte von ca. 2 W/mK erzielt.

Mit den angegebenen Thermoplasten und den angegebenen Füllstoffen werden innerhalb der genannten Bereiche Verbundwerkstoffe erhalten, die bereits in dieser Form gut verarbeitbar, das heißt extrudierbar und spritzgießfähig sind, und die für die genannten elektrischen bzw. elektronischen Anwendungen gut geeignet sind. Doch können für besondere Zwecke im Verbundwerkstoff weitere Inhaltsstoffe enthalten sein. Dies können zur Erzielung bestimmter Eigenschaften übliche Zusätze sein, welche zum Beispiel ausgewählt sind aus Antistatika, Wärme- und Lichtstabilisatoren, Pigmenten, Farbstoffen, optischen Aufhellern, Entformungshilfsmitteln, flammenhemmenden Zusätzen oder Gleit- und Schmiermitteln. Wie bereits erwähnt, sind für die genannten Verbundwerkstoffe keine Zusätze erforderlich. Insbesondere Verbundwerkstoffe mit LCP als Thermoplast erfüllen die Anforderungen für die Flammschutzklasse UL 94 VO und sind auch besonders leicht zu verarbeiten. Dennoch können für einige Verbundwerkstoffe durch Zusatz von insbesondere Gleit- und Schmiermitteln weitere Vorteile erzielt werden, insbesondere eine leichtere Verarbeitbarkeit. Vorteilhafte Zusätze sind daher Fettalkohole, Dicarbonsäureester, Fettsäureester, Fettsäuren, Fettsäureseifen und Fettsäureamide oder davon abgeleitete Verbindungen. Zum Beispiel kann in einem Verbundwerkstoff ein oder mehrere Wachse in einem Anteil von 0,05 bis 10 Gewichtsprozent enthalten sein, insbesondere in einem Anteil von 0,1 bis 5 Gewichtsprozent. Solche Wachse sind zum Beispiel ausgewählt aus Montansäuren, welche ca. 26 bis 32 C-Atome aufweisen, synthetischen Dicarbonsäuren mit mehr als 20 C-Atomen, deren Estern und Seifen, Paraffin-Polyethylen- und Polypropylenwachsen und deren Oxidaten, sowie Amidwachsen.

Die Verbundwerkstoffe sind wie übliche Thermoplaste zu verarbeiten. Sie sind extrudierbar und spritzgießfähig. Eine geeignete Apparatur zum Verarbeiten der Verbundwerkstoffe ist zum Beispiel in der europäischen Patentanmeldung 199 340 beschrieben. Zur Erzeugung des Verbundwerkstoffes wird der entsprechende Thermoplast als Granulat zusammen mit dem Füllstoff extrudiert. Das so erhaltene Material kann wieder in ein Granulat übergeführt werden und in dieser Form in Spritzgießanlagen zu den entsprechenden Bauteilen verarbeitet werden. In großtechnischen Anlagen ist es auch möglich, den Füllstoff durch Kneten in die Polymere einzuarbeiten.

Im folgenden werden als Ausführungsbeispiele drei Zusammensetzungen für einen Verbundwerkstoff nach der Lehre der Erfindung angegeben, sowie in einer Figur dessen Anwendung verdeutlicht.


Erstes Ausführungsbeispiel

In einem Doppelschneckenextruder, wie er zum Beispiel in der europäischen Patentanmeldung 199 340 beschrieben ist, wird eine Mischung extrudiert, welche aus 70 Gewichtsprozent Aluminiumoxid (Körnung 0 bis 30 μm) und 30 Gewichtsprozent eines flüssigkristallinen Polymeren (zum Beispiel Vectra C 950, Firma Hoechst/Celanese) besteht.

Aus dieser extrudierten Mischung werden genormte Spritzgußteile zur Bestimmung der elektrischen und physikalischen Parameter hergestellt. Der Verbundwerkstoff besitzt einen Wärmeleitwert von 2 W/mK, einen spezifischen Durchgangswiderstand von größer $10^{12}$ Ohm cm, eine Durchbruchsspannung von mehr als 5 $kV_{eff}$/mm und eine Dauergebrauchstemperatur von mehr als 150 °C. Die Brandschutzspezifikationen gemäß UL 94 VO werden bis zu einer Dicke von 2 mm erfüllt.

Der Verbundwerkstoff kann zur Verlustwärmeabfuhr in Gehäusen, Umhüllungen oder als Kühlkörper verwendet werden.


Zweites Ausführungsbeispiel

Entsprechend dem ersten Ausführungsbeispiel wird eine Mischung aus 60 Gewichtsprozent Siliziumcarbid (zum Beispiel Silcar N, Firma Elektroschmelzwerk Kempten) und 40 Gewichtsprozent LCP (zum Beispiel Vectra C 950) extrudiert. Daraus hergestellte Spritzgußteile weisen einen Wärmeleitwert von 1,5 W/mK, einen spezifischen Durchgangswiderstand von mehr als $10^{12}$ Ohm cm, eine Durchbruchsspannung von 3 $KV_{eff}$/mm und eine Dauergebrauchstemperatur von mindestens 150 °C auf. Die Flammschutzspezifikationen gemäß UL 94 VO werden bis 2 mm erfüllt.

Drittes Ausführungsbeispiel

Entsprechend wird eine Mischung aus 35 Gewichtsprozent Aluminiumnitrid (Firma ESK) und 65 Gewichtsprozent LCP extrudiert. Daraus gefertigte Spritzgußteile weisen eine Durchbruchsspannung von mehr als 5 $kV_{eff}$/mm, einen spezifischen Durchgangswiderstand von größer $10^{12}$ Ohm cm und eine Dauergebrauchstemperatur von mindestens 150 °C auf. Die Brandschutzspezifikationen gemäß UL 94 VO werden ebenfalls bis 2 mm erfüllt.

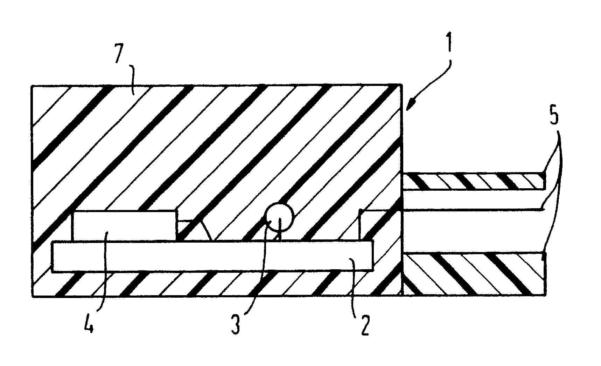

Die Figur zeigt in schematischem Querschnitt ein aus dem erfindungsgemäßen Verbundwerkstoff hergestellte Umhüllung für ein elektronisches Bauteil.

Dargestellt ist elektronisches Leistungsbauteil (zum Beispiel für ein KfZ), welches zum Schutz vor Umwelteinflüssen gekapselt ist. Von der auf einer Leiterplatte 2 angeordneten Baugruppe ist in der Figur nur ein Leistungstransistor 4 und ein Bauteil 3 dargestellt. Die gesamte Baugruppe (2, 3, 4) ist mit dem erfindungsgemäßen Verbundwerkstoff umspritzt, so daß das Leistungsbauteil 1 durch die Verkapselung 7 hermetisch gegen Umwelteinflüsse, zum Beispiel Feuchtigkeit, abgeschirmt ist. Über die Steckverbinder 5 kann der elektrische Kontakt zur Stromversorgung hergestellt werden.


## Ansprüche

1. Hochwärmebeständiger Verbundwerkstoff, bestehend aus
- 15 bis 50 Gewichtsprozent eines hochwärmebeständigen thermoplastischen Polymeren mit einer Wärmeformbeständigkeit größer gleich 180 °C und
- 50 bis 85 Gewichtsprozent eines mineralischen kristallinen Füllstoffes mit einer Wärmeleitfähigkeit größer/gleich 10 W/mK,
wobei der extrudierbare und spritzgießfähige Verbundwerkstoff eine Wärmeleitfähigkeit von mindestens 1 W/mK, eine Wärmeformbeständigkeit von größer gleich 180 °C und eine elektrische Durchschlagsfestigkeit von größer/gleich 3 kV/mm aufweist.

2. Verbundwerkstoff nach Anspruch 1, **dadurch gekennzeichnet,** daß er 20 bis 35 Gewichtsprozent des Polymeren enthält.

3. Verbundwerkstoff nach Anspruch 1 oder 2, **dadurch gekennzeichnet,** daß das hochwärmebeständige Polymere ein Thermoplast ist und ausgewählt ist aus der Gruppe flüssigkristalline Polymere (LCP), Polyphenylensulfid (PPS), Polyetherimid (PEI), Polyethersulfon (PES), Polyetheretherketon (PEEK), Polyethylenterephthalat (PET), Polysulfon (PSU), Polyaryletherketon, Polyamid/imid (PAI), Polyimide (PI) und Polyamid (PA).

4. Verbundwerkstoff nach einem der Ansprüche 1 bis 3, **dadurch gekennzeichnet,** daß der Füllstoff eine Sinterkeramik ist und ausgewählt ist aus der Gruppe Aluminiumnitrid, Aluminiumoxid, Bornitrid, Siliziumcarbid, Borcarbid und Siliziumnitrid.

5. Verbundwerkstoff nach einem der Ansprüche 1 bis 4, bestehend aus 20 bis 35 Gewichtsprozent eines flüssigkristallinen Polymeren und 65 bis 80 Gewichtsprozent eines mineralischen Füllstoffes mit einer Wärmeleitfähigkeit größer 30 W/mK und einem elektrischen Durchgangswiderstandswert von großer $10^{15}$ Ohm cm.

6. Verbundwerkstoff nach Anspruch 5 mit einem zumindest teilaromatischen flüssigkristallinen Polymeren, welches ausgewählt ist aus Copolyester, Polyestercarbonat und Polyesteramid.

7. Verbundwerkstoff nach mindestens einem der Ansprüche 1 bis 6, **dadurch gekennzeichnet,** daß der Füllstoff Korngrößen kleiner 50 μm aufweist.

8. Verbundwerkstoff nach mindestens einem der Ansprüche 1 bis 6, **dadurch gekennzeichnet,** daß der Füllstoff in Form kurzer Fasern vorliegt.

9. Verbundwerkstoff nach mindestens einem der Ansprüche 1 bis 8, **dadurch gekennzeichnet,** daß er weitere übliche Zusätze enthält, ausgewählt aus Antistatika, Wärme- und Lichtstabilisatoren, Pigmenten, Farbstoffen, optischem Aufheller, Entformungshilfsmittel, Flammschutzmittel und Gleit- und Schmiermittel, insbesondere Fettalkohole, Dicarbonsäureester, Fettsäureester, Fettsäuren, Fettsäureseifen und Fettsäureamide.

10. Verbundwerkstoff nach Anspruch 9, **dadurch gekennzeichnet,** daß er 0,05 bis 10 Gewichtsprozent eines oder mehrerer Wachse enthält, welche ausgewählt sind aus Montansäuren (mit 26 bis 32 C-Atomen), synthetischen Dicarbonsäuren mit mehr als 20 C-Atomen, deren Ester und Seifen, Paraffin-, Polyethylen- und Polypropylenwachse und deren Oxidate, sowie Amidwachse.

11. Verbundwerkstoff nach Anspruch 10, **dadurch gekennzeichnet,** daß 0,1 bis 5 Gewichtsprozent Wachse enthalten sind.

12. Verwendung des Verbundwerkstoffes für elektrisch isolierende und gut wärmeleitende Teile bei elektrischen und elektroni schen Bauelementen, insbesondere als Abdeckung, Umhüllung oder Gehäuse.

Europäisches
Patentamt

EUROPÄISCHER
RECHERCHENBERICHT

Nummer der Anmeldung

EP 90 11 8048

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DATABASE WPIL, Nr. 87-165763, Derwent Publicati & JP-A-62 096 538 (DENKI KAGAKU KOGYO K.K.) 06-05-1987 * Zusmmenfassung * — — — | 1-7,12 | C 08 K 3/22 C 08 K 3/28 C 08 K 3/34 C 08 K 3/38 H 01 B 3/30 |
| X | DATABASE WPI, Nr. 79-67106B, Derwent Publicati & JP-A-54 099 137 (DENKI & OSAKA AEROSOL KOGYO K.) 04-08-1979 * Zusammenfassung * — — — | 1,3,4 | |
| A | DE-A-3 525 301 (DR. EGBERT BRANDAU) * Ansprüche * — — — | 1 | |
| A | EP-A-0 305 846 (SUMITOMO CHEMICAL COMPANY, LIMITED) * Ansprüche * — — — — — | 1 | |

RECHERCHIERTE
SACHGEBIETE (Int. Cl.5)

C 08 K
C 08 L
H 01 B

Der vorliegende Recherchenbericht wurde für alle Patentansprüche erstellt

| Recherchenort | Abschlußdatum der Recherche | Prüfer |
|---|---|---|
| Den Haag | 10 Januar 91 | DE LOS ARCOS Y VELAZ |